# EUROPEAN PATENT APPLICATION

(11) **EP 4 269 517 A1**
(43) Date of publication of application: **01.11.2023**
(21) Application number: 21911057.4
(22) Date of filing: 24.12.2021
(51) Int. Cl.: C09J 4/02, C09J 11/04, C09J 11/06, C09J 175/04

(54) **TWO-PART ACRYLIC ADHESIVE FOR VULCANIZED RUBBER**

(30) Priority: 24.12.2020 JP 2020215270
(71) Applicant: The Yokohama Rubber Co., Ltd., Hiratsuka-shi, Kanagawa 254-8601 (JP)
(72) Inventor: OKAMATSU Takahiro, Hiratsuka-shi, Kanagawa 254-8601 (JP); AKIYAMA Hisae, Hiratsuka-shi, Kanagawa 254-8601 (JP)
(74) Representative: Grünecker Patent- und Rechtsanwälte PartG mbB
(86) International application number: PCT/JP2021/048208
(87) International publication number: WO 2022/138920

(57) **Abstract**

An object of the present invention is to provide a two-part acrylic-based adhesive for vulcanized rubber having excellent adhesiveness. The two-part acrylic-based adhesive for vulcanized rubber of the present invention is a two-part acrylic-based adhesive for vulcanized rubber, the adhesive including: an agent (A) containing a (meth)acrylate represented by Formula (1) and a radical generator; and an agent (B) containing a (meth)acrylate represented by Formula (1), a reducing agent, and a polyurethane: CH₂=C(R¹¹)-CO-O-R¹² (1), where in Formula (1), R¹¹ represents a hydrogen atom or a methyl group, and R¹² represents an alkyl group having from 4 to 17 carbons.

## Description

### Technical Field

The present invention relates to a two-part acrylic-based adhesive for vulcanized rubber.

### Background Art

In the related art, two-part acrylic-based adhesives are known as adhesives (e.g., Patent Document 1).

### Citation List

### Patent Literature

Patent Document 1: JP 2001-055421 A

### Summary of Invention

### Technical Problem

Recently, there have been systems that monitor information (e.g., such as an air pressure) on a tire mounted on a vehicle using the Internet of Things (IoT). In the above system, the tire has a container for housing a device, such as a sensor for monitoring information on the tire. Typically, the container is fixed to the tire (e.g., innerliner) with an adhesive.

The present inventors prepared a two-part acrylic-based adhesive with reference to Patent Document 1, applied the adhesive on the surface of the innerliner, and compression-bonded a rubber container for housing a sensor, and found that the adhesiveness was not necessarily sufficient.

Thus, in view of the above problem, an object of the present invention is to provide a two-part acrylic-based adhesive for vulcanized rubber having excellent adhesiveness.

### Solution to Problem

As a result of diligent research to solve the above problem, the present inventors have found that the above problem can be solved by an adhesive including: an agent A containing a specific (meth)acrylate and a radical generator; and an agent B containing a specific (meth)acrylate, a reducing agent, and a polyurethane, and have completed the present invention.

In other words, the present inventors have found that the above problem can be solved by the following constitutions.

(1) A two-part acrylic-based adhesive for vulcanized rubber, the adhesive including:
   an agent A containing a (meth)acrylate represented by Formula (1) and a radical generator; and
   an agent B containing a (meth)acrylate represented by Formula (1), a reducing agent, and a polyurethane:

      CH₂=C(R¹¹)-CO-O-R¹² (1)
   where in Formula (1), R¹¹ represents a hydrogen atom or a methyl group, and R¹² represents an alkyl group having from 4 to 17 carbons.
(2) The two-part acrylic-based adhesive for vulcanized rubber according to (1) above, wherein a mass ratio of a total of the (meth)acrylate in the agent A and the (meth)acrylate in the agent B to the polyurethane in the agent B is from 3/7 to 8/2.
(3) The two-part acrylic-based adhesive for vulcanized rubber according to (1) or (2) above, wherein the polyurethane has a number average molecular weight of 2000 or more and 100000 or less and is a polyurethane obtained by reacting a polyisocyanate and a polyol.

### Advantageous Effects of Invention

The present invention can provide the two-part acrylic-based adhesive for vulcanized rubber having excellent adhesiveness as described below.

### Description of Embodiments

A two-part acrylic-based adhesive for vulcanized rubber according to an embodiment of the present invention will be described below.

Note that in the present specification, value ranges indicated using "from ... to ..." or "of ... to ..." mean ranges including the value before "to" as a lower limit value and the value after "to" as an upper limit value.

In addition, for each component contained in the two-part acrylic-based adhesive for vulcanized rubber according to an embodiment of the present invention, one type may be used individually, or two or more types may be used in combination. Here, when two or more types are used in combination for each component, the content of the corresponding component refers to the total content unless otherwise stated.

Furthermore, in the present specification, "(meth)acrylate" represents acrylate or methacrylate.

The two-part acrylic-based adhesive for vulcanized rubber according to an embodiment of the present invention (hereinafter also referred to as "the adhesive according to an embodiment of the present invention") is a two-part acrylic-based adhesive for vulcanized rubber, the adhesive including:
an agent A containing a (meth)acrylate represented by Formula (1) described below and a radical generator; and
an agent B containing a (meth)acrylate represented by Formula (1), a reducing agent, and a polyurethane.

Each component contained in the adhesive according to an embodiment of the present invention will be described below.

### Agent A

The agent A contains a (meth)acrylate represented by Formula (1) described below and a radical generator.

### Specific monomer

As described above, the agent A contains a (meth)acrylate represented by Formula (1) below (hereinafter also referred to as the "specific monomer").

CH₂=C(R¹¹)-CO-O-R¹² (1)

In Formula (1), R¹¹ represents a hydrogen atom or a methyl group, and R¹² represents an alkyl group having from 4 to 17 carbons.

R¹¹

As described above, in Formula (1), R¹¹ represents a hydrogen atom or a methyl group. Among these, R¹¹ is preferably a methyl group for the reason of even better adhesiveness, coatability, durability, and heat resistance.

Hereinafter, the expression "even better adhesiveness, coatability, durability, and heat resistance" is also referred to as "even better effects of the present invention and the like".

R¹²

As described above, in Formula (1), R¹² represents an alkyl group having from 4 to 17 carbons.

The alkyl group may be a straight-chain, branched, or cyclic alkyl group, but for the reason of even better effects of the present invention and the like, the alkyl group is preferably a straight-chain alkyl group.

The number of carbons (hereinafter also referred to as "the number of carbons of the specific monomer") is preferably from 4 to 12, more preferably from 4 to 10, even more preferably from 4 to 8, and particularly preferably from 4 to 6 for the reason of even better effects of the present invention and the like.

### Specific examples

Specific examples of the specific monomer include butyl (meth)acrylate, octyl (meth)acrylate, dodecyl (meth)acrylate, and heptadecyl (meth)acrylate. Among these, for the reason of even better effects of the present invention and the like, the specific monomer is preferably butyl (meth)acrylate or octyl (meth)acrylate and more preferably butyl (meth)acrylate.

### Content

The content of the specific monomer in the agent A is not particularly limited; however, for the reason of even better effects of the present invention and the like, the content is preferably 50 mass% or more, more preferably 70 mass% or more, and even more preferably 90 mass% or more with respect to the total agent A. The upper limit is not particularly limited; however, for the reason of even better effects of the present invention and the like, the upper limit is preferably 99 mass% or less, more preferably 97 mass% or less, and even more preferably 95 mass% or less.

### Radical generator

The radical generator comes into contact with a reducing agent in the agent B described below, and thus generates radicals. Note that the generated radicals allow radical polymerization of the specific monomers in the agents A and B, and thus the adhesive according to an embodiment of the present invention is cured.

The radical generator is preferably an organic peroxide for the reason of even better effects of the present invention and the like.

Examples of the organic peroxide include hydroperoxides, such as t-butyl hydroperoxide, p-menthane hydroperoxide, cumene hydroperoxide, and diisopropylbenzene hydroperoxide; and peroxyesters, such as t-butyl peroxybenzoate, t-butyl peroxylaurate, and t-butyl peroxydecanoate. Among these, for the reason of even better effects of the present invention and the like, the organic peroxide is preferably a hydroperoxide and more preferably t-butyl hydroperoxide.

### Content

The content of the radical generator in the agent A is not particularly limited; however, for the reason of even better effects of the present invention and the like, the content is preferably from 1 to 20 mass% and more preferably from 5 to 10 mass% with respect to the total agent A.

### Agent B

The agent B contains a specific monomer, a reducing agent, and a polyurethane.

### Specific monomer

The definition, specific examples, and suitable aspect of the specific monomer are the same as those of the specific monomer in the agent A described above. The specific monomer in the agent B may be the same as or different from the specific monomer in the agent A.

### Content

The content of the specific monomer in the agent B is not particularly limited; however, for the reason of even better effects of the present invention and the like, the content is preferably 10 mass% or more, more preferably 20 mass% or more, and even more preferably 30 mass% or more with respect to the total agent B. The upper limit is not particularly limited; however, for the reason of even better effects of the present invention and the like, the upper limit is preferably 90 mass% or less, more preferably 70 mass% or less, and even more preferably 50 mass% or less.

### Reducing agent

The reducing agent is not particularly limited, but its specific examples include tertiary amines, such as triethylamine and tripropylamine; thiourea derivatives, such as 2-mercaptobenzimidazole, monobenzoylthiourea, and ethylenethiourea; and metal compounds, such as cobalt naphthenate and vanadium compounds. Among these, for the reason of even better effects of the present invention and the like, the reducing agent is preferably a vanadium compound.

Specific examples of the vanadium compound include metal oxides, such as vanadium pentoxide; metal soaps, such as vanadyl octenoate, vanadyl naphthenate, and vanadyl stearate; and metal chelates, such as vanadyl acetylacetonate and vanadium acetylacetonate. Among these, for the reason of even better effects of the present invention and the like, the vanadium compound is preferably a metal oxide and more preferably vanadium pentoxide.

### Content

The content of the reducing agent in the agent B is not particularly limited; however, for the reason of even better effects of the present invention and the like, the content is preferably from 0.1 to 10 mass% and more preferably from 1 to 5 mass% with respect to the total agent B.

### Polyurethane

The polyurethane is any polymer having a urethane bond and is not limited to a particular polyurethane.

For the reason of even better effects of the present invention and the like, the polyurethane is preferably a compound obtained by polymerizing a polyisocyanate and a compound having two or more active hydrogen-containing groups per molecule (active hydrogen compound).

The polyisocyanate is any polyisocyanate having two or more isocyanate groups per molecule and is not limited to a particular polyisocyanate.

Examples of the polyisocyanate include:
aromatic polyisocyanates, such as tolylene diisocyanate (TDI), diphenylmethane diisocyanate (MDI; e.g., 4,4'-diphenylmethane diisocyanate and 2,4'-diphenylmethane diisocyanate), 1,4-phenylene diisocyanate, polymethylene polyphenylene polyisocyanate, xylylene diisocyanate (XDI), tetramethylxylylene diisocyanate (TMXDI), tolidine diisocyanate (TODI), 1,5-naphthalene diisocyanate (NDI), and triphenylmethane triisocyanate;
aliphatic polyisocyanates (including alicyclic polyisocyanates), such as hexamethylene diisocyanate (HDI), trimethylhexamethylene diisocyanate (TMHDI), lysine diisocyanate, norbornane diisocyanate (NBDI), trans-cyclohexane-1,4-diisocyanate, isophorone diisocyanate (IPDI), bis(isocyanate methyl)cyclohexane (H₆XDI), and dicyclohexylmethane diisocyanate (H₁₂MDI);
carbodiimide-modified polyisocyanates thereof; and
isocyanurate-modified polyisocyanates thereof.

The compound having two or more active hydrogen-containing groups per molecule (active hydrogen compound) is not particularly limited. Examples of the active hydrogen-containing group include a hydroxy (OH) group, an amino group, and an imino group.

Suitable examples of the active hydrogen compound include polyol compounds having two or more hydroxy (OH) groups per molecule. Among these, the active hydrogen compound is preferably a polyol compound.

The polyol compound is any compound having two or more hydroxy groups and is not limited to a particular polyol compound. Examples of the polyol compound include polycarbonate polyols; polyether polyols; polyester polyols; polymer polyols having a carbon-carbon bond in the main chain backbone, such as acrylic polyols, polybutadiene diols, and hydrogenated polybutadiene polyols; low molecular weight polyhydric alcohols; and mixed polyols thereof. Among these, for the reason of even better effects of the present invention and the like, the polyol compound is preferably a polycarbonate polyol.

A method of producing the polyurethane is not particularly limited. For example, the polyurethane can be produced by mixing and reacting a polyisocyanate with an active hydrogen compound, with the amount of the polyisocyanate used being such that from 1.5 to 2.5 mol of isocyanate groups react with 1 mol of active hydrogen-containing groups (e.g., hydroxy groups) contained in the active hydrogen compound. Hereinafter, the number of moles of the isocyanate groups contained in the polyisocyanate per mole of active hydrogen-containing group contained in the active hydrogen compound is also referred to as "NCO/OH".

### Content

The content of the polyurethane in the agent B is not particularly limited; however, for the reason of even better effects of the present invention and the like, the content is preferably 10 mass% or more, more preferably 20 mass% or more, even more preferably 30 mass% or more, particularly preferably 40 mass% or more, and most preferably 50 mass% or more with respect to the total agent B. The upper limit is not particularly limited; however, for the reason of even better effects of the present invention and the like, the upper limit is preferably 90 mass% or less, more preferably 80 mass% or less, and even more preferably 70 mass% or less.

### Specific monomer/polyurethane

The mass ratio of the total of the specific monomer in the agent A and the specific monomer in the agent B to the polyurethane in the agent B is not particularly limited; however, for the reason of even better effects of the present invention and the like, the ratio is preferably from 1/9 to 9/1, more preferably from 3/7 to 8/2, and even more preferably from 4/6 to 6/4.

Hereinafter, the "mass ratio of the total of the specific monomer in the agent A and the specific monomer in the agent B to the polyurethane in the agent B" is also referred to as "specific monomer/polyurethane".

### Radical generator/specific monomer

The content of the radical generator in the agent A with respect to the total of the specific monomer in the agent A and the specific monomer in the agent B is not particularly limited; however, for the reason of even better effects of the present invention and the like, the content is preferably from 1 to 10 mass% and more preferably from 2 to 5 mass%.

Hereinafter, the "content of the radical generator in the agent A with respect to the total of the specific monomer in the agent A and the specific monomer in the agent B" is also referred to as "radical generator/specific monomer".

### Reducing agent/specific monomer

The content of the reducing agent in the agent B with respect to the total of the specific monomer in the agent A and the specific monomer in the agent B is not particularly limited; however, for the reason of even better effects of the present invention and the like, the content is preferably from 1 to 10 mass% and more preferably from 2 to 5 mass%.

Hereinafter, the "content of the reducing agent in the agent B with respect to the total of the specific monomer in the agent A and the specific monomer in the agent B" is also referred to as "reducing agent/specific monomer".

### Specific monomer in agent A/specific monomer in agent B

The mass ratio of the specific monomer in the agent A to the specific monomer in the agent B is not particularly limited; however, for the reason of even better effects of the present invention and the like, the ratio is preferably from 1/9 to 9/1, more preferably from 3/7 to 7/3, and even more preferably from 4/6 to 6/4.

Hereinafter, the "mass ratio of the specific monomer in the agent A to the specific monomer in the agent B" is also referred to as "specific monomer in agent A/specific monomer in agent B".

### Radical generator/reducing agent

The mass ratio of the radical generator in the agent A to the reducing agent in the agent B is not particularly limited; however, for the reason of even better effects of the present invention and the like, the mass ratio is preferably from 1/9 to 9/1, more preferably from 3/7 to 7/3, and even more preferably from 4/6 to 6/4.

Hereinafter, the "mass ratio of the radical generator in the agent A to the reducing agent in the agent B" is also referred to as "radical generator/reducing agent".

### Optional component

The adhesive (the agent A and/or the agent B) according to an embodiment of the present invention may contain a component (an optional component) other than the components described above.

Examples of such an optional component include monomers other than the specific monomer (e.g., monofunctional (meth)acrylates and polyfunctional (meth)acrylates other than the specific monomer), polymers other than the polyurethane, plasticizers, balloons (hollow bodies), curing catalysts, anti-aging agents, antioxidants, reaction modifiers, fillers, diluents (solvents), thixotropic agents, thickeners, dispersants, and pigments.

### Preparation method

The method of preparing the adhesive according to an embodiment of the present invention is not particularly limited, but examples include a method in which the components described above are mixed for each of the agents A and B.

Note that the agents A and B are mixed at the time of use.

### Application

The adhesive according to an embodiment of the present invention is useful as an adhesive for fixing another material (e.g., a rubber container for housing a device) to vulcanized rubber (e.g., a tire (particularly an innerliner)).

### Examples

The present invention will be described in further detail below by examples, but the present invention is not limited to these examples.

### Preparation of two-part acrylic-based adhesive

Two-part acrylic-based adhesives (agents A and B) were prepared by mixing the components for each of the agents A and B shown in Table 1 in the proportions (parts by mass) shown in the table.

### Adhesiveness

The resulting agents A and B of the two-part acrylic-based adhesive were mixed and applied to the innerliner on the inner surface of a tire (after vulcanization) (application amount: from 2 to 5 g/cm²), and a rubber container (vulcanized product of a rubber composition containing natural rubber) for housing a sensor was compression-bonded. After a lapse of one day, the rubber container was peeled off from the innerliner, and the peel strength at that time was measured. Then, the adhesiveness was evaluated according to the following criteria. The results are shown in Table 1. Practically, the result is preferably Excellent, Good, or Fair, more preferably Excellent or Good, and even more preferably Excellent.
- Excellent: 25 N/m or more
- Good: 20 N/m or more and less than 24 N/m
- Fair: 8 N/m or more and less than 19 N/m
- Poor: less than 8 N/m

**[Table 1-1]**

| Table 1 | | Comparative Example 1 | Example 1 | Example 2 | Example 3 | Example 4 | Comparative Example 2 |
|---|---|---|---|---|---|---|---|
| Agent A | Comparative monomer 1 (1 carbon) | 2.5 | | | | | |
| | Specific monomer 1 (4 carbons) | | 2.5 | | | 2.5 | |
| | Specific monomer 2 (8 carbons) | | | 2.5 | | | |
| | Specific monomer 3 (17 carbons) | | | | 2.5 | | |
| | Comparative monomer 2 (23 carbons) | | | | | | 2.5 |
| | Radical generator | 0.2 | 0.2 | 0.2 | 0.2 | 0.2 | 0.2 |
| Agent B | Specific monomer 1 (4 carbons) | 2.5 | 2.5 | 2.5 | 2.5 | | 2.5 |
| | Specific monomer 3 (17 carbons) | | | | | 2.5 | |
| | Polyurethane | 5 | 5 | 5 | 5 | 5 | 5 |
| | Reducing agent | 0.2 | 0.2 | 0.2 | 0.2 | 0.2 | 0.2 |
| (Meth)acrylate/polyurethane | | 5/5 | 5/5 | 5/5 | \| 5/5 | \| 5/5 | 5/5 |
| Adhesiveness | | Poor | Excellent | Good | Fair | \| Fair | Poor |

**[Table 1-2]**

| Table 1 | | Example 5 | Example 6 | Example 7 | Example 8 | Example 9 | Comparative Example 3 |
|---|---|---|---|---|---|---|---|
| Agent A | Comparative monomer 1 (1 carbon) | | | | | | |
| | Specific monomer 1 (4 carbons) | 0.5 | 1 | 1.5 | 4 | 4.5 | 2.5 |
| | Specific monomer 2 (8 carbons) | | | | | | |
| | Specific monomer 3 (17 carbons) | | | | | | |
| | Comparative monomer 2 (23 carbons) | | | | | | |
| | Radical generator | 0.04 | 0.08 | 0.12 | 0.32 | 0.36 | 0.2 |
| Agent B | Specific monomer 1 (4 carbons) | 0.5 | 1 | 1.5 | 4 | 4.5 | 2.5 |
| | Specific monomer 3 (17 carbons) | | | | | | |
| | Polyurethane | 9 | 8 | 7 | 2 | 1 | |
| | Reducing agent | 0.04 | 0.08 | 0.12 | 0.32 | 0.36 | 0.2 |
| (Meth)acrylate/polyurethane | | 1/9 | 2/8 | 3/7 | 8/2 | 9/1 | - |
| Adhesiveness | | Fair | Fair | Good | Good | Fair | Poor |

Details of each of the components in Table 1 are as follows.
· Comparative monomer 1: a methacrylate represented by Formula (1) described above. However, R¹¹ represents a methyl group, and R¹² represents an alkyl group having 1 carbon (a methyl group). R¹² is an alkyl group having 1 carbon, and thus the comparative monomer 1 does not correspond to the specific monomer described above.
· Specific monomer 1: a methacrylate represented by Formula (1) described above. Here, R¹¹ represents a methyl group, and R¹² represents a straight-chain alkyl group having 4 carbons. The specific monomer 1 corresponds to the specific monomer described above.
· Specific monomer 2: a methacrylate represented by Formula (1) described above. Here, R¹¹ represents a methyl group, and R¹² represents a straight-chain alkyl group having 8 carbons. The specific monomer 2 corresponds to the specific monomer described above.
· Specific monomer 3: a methacrylate represented by Formula (1) described above. Here, R¹¹ represents a methyl group, and R¹² represents a straight-chain alkyl group having 17 carbons. The specific monomer 3 corresponds to the specific monomer described above.
· Comparative monomer 2: a methacrylate represented by Formula (1) described above. However, R¹¹ represents a methyl group, and R¹² represents an alkyl group having 23 carbons. R¹² is an alkyl group having 23 carbons, and thus the comparative monomer 2 does not correspond to the specific monomer described above.
· Radical generator: t-butyl hydroperoxide
· Polyurethane: PANDEX 5205 available from DIC Corporation (polyurethane, Mn 25000)
· Reducing agent: vanadium pentoxide

In Table 1, "carbon" or "carbons" for monomers represents the number of carbons of the alkyl group represented by R¹² in Formula (1). In addition, in Table 1, "(meth)acrylate/polyurethane" represents the mass ratio of the total of the (meth)acrylate in the agent A and the (meth)acrylate in the agent B to the polyurethane in the agent B.

As can be seen from Table 1, Examples 1 to 9 including the agent A containing the specific monomer and the radical generator and the agent B containing the specific monomer, the reducing agent, and the polyurethane all exhibited excellent adhesiveness.

From the comparison between Examples 1 to 4 (comparison between the corresponding examples with a different type of specific monomer), Examples 1 and 2 in which the specific monomer had from 4 to 8 carbons in both the agents A and B exhibited even better adhesiveness. Among them, Example 1 in which the specific monomer had from 4 to 6 carbons in both the agents A and B exhibited further even better adhesiveness.

In addition, from the comparison between Example 1 and Examples 5 to 9 (comparison between aspects with different specific monomer/polyurethane), Examples 1, 7, and 8 with a specific monomer/polyurethane of 3/7 to 8/2 exhibited even better adhesiveness. Among them, Example 1 with a specific monomer/polyurethane of 4/6 to 6/4 exhibited further even better adhesiveness.

On the other hand, Comparative Examples 1 and 2 in which the agent A did not contain the specific monomer and Comparative Example 3 in which the agent B did not contain polyurethane had insufficient adhesiveness.

## Claims

1. A two-part acrylic-based adhesive for vulcanized rubber, the adhesive comprising:
an agent A comprising a (meth)acrylate represented by Formula (1) and a radical generator; and
an agent B comprising a (meth)acrylate represented by Formula (1), a reducing agent, and a polyurethane:
CH₂=C(R¹¹)-CO-O-R¹² (1)
where in Formula (1), R¹¹ represents a hydrogen atom or a methyl group, and R¹² represents an alkyl group having from 4 to 17 carbons.

2. The two-part acrylic-based adhesive for vulcanized rubber according to claim 1, wherein a mass ratio of a total of the (meth)acrylate in the agent A and the (meth)acrylate in the agent B to the polyurethane in the agent B is from 3/7 to 8/2.

3. The two-part acrylic-based adhesive for vulcanized rubber according to claim 1 or 2, wherein the polyurethane has a number average molecular weight of 2000 or more and 100000 or less and is a polyurethane obtained by reacting a polyisocyanate and a polyol.
